# EUROPEAN PATENT APPLICATION

(11) **EP 2 918 803 A1**
(43) Date of publication of application: **16.09.2015**
(21) Application number: 13839760.9
(22) Date of filing: 19.09.2013
(51) Int. Cl.: F01N 3/04, F01N 3/02, F01N 3/033, F01N 3/037

(54) **WET SCRUBBER DEVICE, ENGINE SYSTEM, AND SHIP**

(30) Priority: 19.09.2012 JP 2012205336
(71) Applicant: Kawasaki Jukogyo Kabushiki Kaisha, Kobe-shi, Hyogo 650-8670 (JP)
(72) Inventor: YOSHIZAWA, Katsuhiro, Akashi-shi, Hyogo 673-8666 (JP); HOSONO, Takamichi, Akashi-shi, Hyogo 673-8666 (JP); TAKATA, Hirotaka, Kobe-shi, Hyogo 650-8670 (JP); IWASAKI, Hidekazu, Akashi-shi, Hyogo 673-8666 (JP); NISHIMURA, Motohiko, Akashi-shi, Hyogo 673-8666 (JP); HIGASHIDA, Masanori, Kobe-shi, Hyogo 650-8670 (JP); NOGAMI, Tetsuo, Kobe-shi, Hyogo 650-8670 (JP)
(74) Representative: Witte, Weller & Partner Patentanwälte mbB
(86) International application number: PCT/JP2013/005528
(87) International publication number: WO 2014/045578

(57) **Abstract**

A scrubber 31 includes: an exhaust gas inflow passage 41 through which a high-temperature exhaust gas is introduced; an injecting portion 42 configured to inject clean water to the exhaust gas introduced through the exhaust gas inflow passage 41; an upper chamber 43 including a bottom surface configured to receive the clean water injected from the injecting portion 42; a lower chamber 44 located under the upper chamber 43; a communication pipe 45 which extends downward from the bottom surface 51 of the upper chamber 43, in which an opening portion 57 of a lower portion of the communication pipe 45 is open in the lower chamber 44, through which the clean water received by the bottom surface 51 of the upper chamber 43 is discharged to the lower chamber 44, and through which the exhaust gas in the upper chamber 43 is accelerated to be introduced to the lower chamber 44; and an exhaust gas outflow passage 46 through which the exhaust gas having been introduced to the lower chamber 44 is suctioned and discharged from the lower chamber 44.

## Description

### Technical Field

The present invention relates to a scrubber configured to remove SOx and particulate matters contained in an exhaust gas of a diesel engine. The present invention also relates to an engine system including the scrubber and a ship including the scrubber.

### Background Art

Regulations on NOx emissions from diesel engines mounted on ships have a trend to be strengthened internationally as with the other engines, such as engines of cars. One example of a method of suppressing the generation of the NOx is an exhaust gas recirculation (EGR) of returning a part of an exhaust gas to a combustion chamber to reduce an oxygen concentration in a cylinder. In the case of recirculating the exhaust gas, SOx and particulate matters, which are suspended particles, contained in the exhaust gas need to be removed. One example of a device which removes the SOx and the particulate matters from the exhaust gas is a scrubber.

As the scrubber, there are a reserved water type and a pressurized water type. According to the reserved water type scrubber, the SOx and the particulate matters are removed from the exhaust gas by causing the exhaust gas to flow through clean water (reserved water) stored in a container or the like (see PTLs 1 and 2, for example). According to the reserved water type scrubber, the level of the reserved water affects its performance. If the reserved water type scrubber is mounted on a ship, the surface of the reserved water trembles, so that the performance of the reserved water type scrubber cannot be maintained constant. Further, according to the reserved water type scrubber, the exhaust gas blows up the clean water in the vicinity of the water surface, so that a large-size mist separator is required.

On the other hand, according to the pressurized water type scrubber, the SOx and the particulate matters are removed from the exhaust gas in such a manner that: fine water droplets are generated by pressurizing the clean water; and the SOx and the particulate matters are caused to contact the fine water droplets. A typical example of the pressurized water type scrubber is a scrubber using a venturi tube. When the exhaust gas and the mist of the clean water are caused to flow through the venturi tube, the exhaust gas accelerates at a throat portion, and the accelerated exhaust gas pressurizes the mist of clean water to make the mist of the water finer. The pressurized water type scrubber is affected little by the rolling of the ship, and the large-size mist separator is not required.

### Citation List

### Patent Literature

PTL 1: Japanese Laid-Open Patent Application Publication No. 11-90170
PTL 2: Japanese Laid-Open Patent Application Publication No. 2010-203431

### Summary of Invention

### Technical Problem

In the scrubber using the venturi tube, it is effective if the clean water serves as cooling water for cooling the exhaust gas. However, since the clean water flowing through the venturi tube is in the form of the mist, the amount of clean water flowing through the venturi tube is limited. Therefore, according to the scrubber using the venturi tube, a large amount of clean water cannot be ejected. As a result, the clean water cannot adequately cool down the exhaust gas.

The present invention was made in light of these circumstances, and an object of the present invention is to provide a scrubber capable of efficiently cooling down an exhaust gas by injecting a large amount of clean water and also capable of making a part of the clean water fine and causing the fine clean water to capture SOx and particulate matters contained in the exhaust gas.

### Solution to Problem

A scrubber according to one aspect of the present invention is a scrubber configured to remove SOx and particulate matters contained in an exhaust gas of a diesel engine, the scrubber including: an exhaust gas inflow passage through which a high-temperature exhaust gas is introduced; an injecting portion configured to inject clean water to the exhaust gas introduced through the exhaust gas inflow passage; an upper chamber including a bottom surface configured to receive the clean water injected from the injecting portion; a lower chamber located under the upper chamber; a communication pipe through which the clean water received by the bottom surface of the upper chamber is discharged to the lower chamber and the exhaust gas in the upper chamber is introduced to the lower chamber; and an exhaust gas outflow passage through which the exhaust gas having been introduced to the lower chamber is suctioned and discharged from the lower chamber.

According to this configuration, even in a case where a large amount of clean water is injected, most of the clean water becomes a liquid state to be discharged from the upper chamber along the inner side surface of the communication pipe to the lower chamber. On the other hand, the mist of the clean water flows through an inner side of the liquid clean water together with the exhaust gas. With this, the mist of the clean water is made finer, so that the fine mist can efficiently capture the SOx and particulate matters in the exhaust gas.

The above scrubber may be configured such that: the communication pipe extends downward from the bottom surface of the upper chamber; and an opening portion formed at a lower portion of the communication pipe is open in the lower chamber.

The above scrubber may be configured such that: the communication pipe is one of a plurality of communication pipes; and each of the opening portions of the communication pipes is formed to be open in a substantially tangential direction (which does not have to be an exact tangential direction) of a virtual circle around a vicinity of a center of the lower chamber. According to the above configuration, when the clean water having captured the SOx and the particulate matters is discharged through the opening portion, the clean water flows rotationally in the lower chamber. In this case, the clean water having captured the SOx and the particulate matters is collected on an inner wall of the lower chamber by centrifugal force. Therefore, the SOx and particulate matters contained in the exhaust gas can be more surely collected.

In the above scrubber, the exhaust gas outflow passage may be configured such that the exhaust gas in the lower chamber is suctioned through a center of an upper portion of the lower chamber. According to the above configuration, the mist of the clean water discharged from the opening portion flows rotationally and upward in a spiral manner. Therefore, the clean water generates a smoother rotational flow, so that the collection efficiency of the SOx and the particulate matters can be improved.

The above scrubber may be configured such that when a flow rate of the exhaust gas in the scrubber decreases, the amount of clean water injected from the injecting portion is increased. According to the above configuration, even in a case where the flow rate of the exhaust gas decreases by the decrease in the load of the diesel engine, the effective area in the communication pipe can be made small by increasing the amount of clean water injected. With this, the flow velocity of the exhaust gas in the communication pipe can be maintained within an appropriate range.

An engine system according to another aspect of the present invention includes a diesel engine and the above scrubber. A ship according to still another aspect of the present invention includes the engine system.

### Advantageous Effects of Invention

According to the above-described scrubber, the exhaust gas can be efficiently cooled down by injecting a large amount of clean water. In addition, a part of the clean water can be made finer, and the fine clean water can capture the SOx and particulate matters contained in the exhaust gas.

### Brief Description of Drawings

Fig. 1 is a block diagram of an engine system according to one embodiment of the present invention.
Fig. 2 is a system diagram of a scrubber shown in Fig. 1.
Fig. 3 is an enlarged view of a lower portion of a communication pipe shown in Fig. 2.
Fig. 4 is a horizontal cross-sectional view of a lower chamber shown in Fig. 2.

### Description of Embodiments

Hereinafter, one embodiment of the present invention will be explained in reference to the drawings. In the following explanations and drawings, the same reference signs are used for the same or corresponding components, and a repetition of the same explanation is avoided.

### Engine System

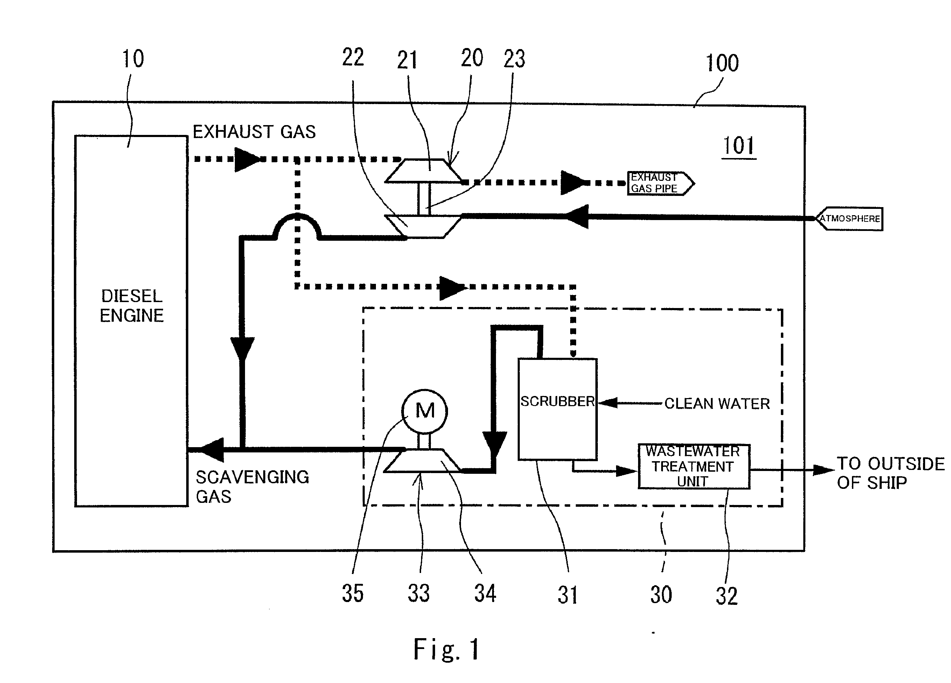

First, an engine system 101 according to the present embodiment will be explained. Fig. 1 is a block diagram of the engine system 101. In Fig. 1, thick solid lines denote the flow of a scavenging gas, and thick broken lines denote the flow of an exhaust gas. The engine system 101 according to the present embodiment is for a ship and mounted on a ship 100. As shown in Fig. 1, the engine system 101 includes a diesel engine 10, a turbocharger 20, and an exhaust gas recirculation unit 30.

The diesel engine 10 is a main component of the engine system 101. The diesel engine 10 is coupled to a propulsion propeller (not shown) and rotates this propeller. The diesel engine 10 of the present embodiment is an engine for a large ship and uses so-called heavy oil as a fuel. Therefore, the exhaust gas of the diesel engine 10 contains not only SOx but also a large amount of particulate matters containing soot as a major component.

The turbocharger 20 is a device configured to supply compressed air to the diesel engine 10. The turbocharger 20 includes a turbine portion 21 and a compressor portion 22. The exhaust gas is supplied from the diesel engine 10 to the turbine portion 21, and the turbine portion 21 rotates by the energy of the exhaust gas. The turbine portion 21 and the compressor portion 22 are coupled to each other by a shaft portion 23. When the turbine portion 21 rotates, the compressor portion 22 also rotates. When the compressor portion 22 rotates, the air taken from outside is compressed, and the compressed air is supplied as the scavenging gas to the diesel engine 10.

The exhaust gas recirculation unit 30 is a unit configured to return the exhaust gas to the diesel engine 10. The exhaust gas discharged from the diesel engine 10 is supplied to not only the turbocharger 20 but also the exhaust gas recirculation unit 30. Although details will be described later, the SOx and the particulate matters are removed from the exhaust gas supplied to the exhaust gas recirculation unit 30, and the exhaust gas is then returned to the diesel engine 10. The concentration of oxygen is low in the exhaust gas discharged from the diesel engine 10. Therefore, by returning the exhaust gas to the diesel engine 10, the combustion temperature decreases. As a result, the amount of NOx discharged from the diesel engine 10 can be reduced.

### Exhaust Gas Recirculation Unit

Next, the exhaust gas recirculation unit 30 according to the present embodiment will be explained in more detail. As described above, the exhaust gas recirculation unit 30 is a unit configured to return the exhaust gas to the diesel engine 10. As shown in Fig. 1, the exhaust gas recirculation unit 30 includes a scrubber 31, a wastewater treatment unit 32, and an EGR blower 33.

The scrubber 31 is a device configured to remove the SOx and the particulate matters that are suspended particulate matters from the exhaust gas of the diesel engine 10. As described above, the exhaust gas of the diesel engine for the large ship contains a large amount of SOx and particulate matters. Therefore, the exhaust gas recirculation unit used in the large ship requires the scrubber. The scrubber 31 uses clean water to remove the SOx and the particulate matters from the exhaust gas. A part of the clean water used in the scrubber 31 is discharged as scrubber wastewater to the wastewater treatment unit 32. The other details of the scrubber 31 will be described later.

The wastewater treatment unit 32 is a device configured to treat the scrubber wastewater discharged from the scrubber 31. Since the scrubber wastewater contains a large amount of SOx and particulate matters, it cannot be discharged to the outside of the ship as is. In the case of discharging the scrubber wastewater to the outside of the ship, the turbidity of the scrubber wastewater needs to be lowered to be equal to or lower than a predetermined value by the wastewater treatment unit 32. As one example, the wastewater treatment unit 32 includes therein a centrifugal separator, and the SOx and the particulate matters are removed from the scrubber wastewater by the centrifugal separator.

The EGR blower 33 is a device configured to pressurize the exhaust gas having flowed through the scrubber 31 and then return the pressurized exhaust gas as the scavenging gas to the diesel engine 10. The EGR blower 33 includes a blower 34 and an electric motor 35. The blower 34 is driven by the electric motor 35. The exhaust gas from which the SOx and the particulate matters have been removed by the scrubber 31 is pressurized by the blower 34. The exhaust gas having been pressurized by the EGR blower 33 (blower 34) is mixed with the air, having been compressed by the turbocharger 20, to be supplied to the diesel engine 10.

### Scrubber

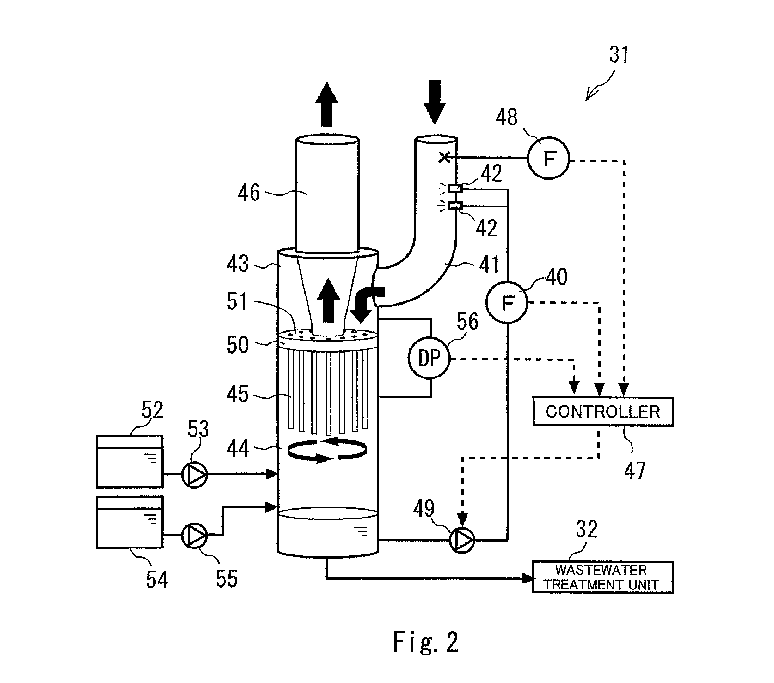

Next, the scrubber 31 according to the present embodiment will be explained in more detail. Fig. 2 is a system diagram of the scrubber 31. As shown in Fig. 2, the scrubber 31 includes an exhaust gas inflow passage 41, injecting portions 42, an upper chamber 43, a lower chamber 44, communication pipes 45, an exhaust gas outflow passage 46, and a controller 47. Hereinafter, these components will be explained in order.

The exhaust gas inflow passage 41 is a passage through which the exhaust gas discharged from the diesel engine 10 is introduced into the scrubber 31. The exhaust gas discharged from the diesel engine 10 is introduced into the scrubber 31 in a state where the exhaust gas is high in temperature. The exhaust gas inflow passage 41 of the present embodiment is formed in a tube shape, and a downstream side thereof is coupled to the upper chamber 43. To be specific, the exhaust gas having flowed through the exhaust gas inflow passage 41 flows into the upper chamber 43. An exhaust gas flow meter 48 is attached to the exhaust gas inflow passage 41 and measures the flow rate of the exhaust gas flowing through the exhaust gas inflow passage 41 (hereinafter simply referred to as an "exhaust gas flow rate"). A signal regarding the exhaust gas flow rate measured by the exhaust gas flow meter 48 is transmitted to the controller 47.

The injecting portions 42 are devices configured to inject the clean water to the exhaust gas introduced through the exhaust gas inflow passage 41. In the present embodiment, the injecting portions 42 are respectively provided at two positions of the exhaust gas inflow passage 41. The clean water is injected from the injecting portions 42 by reutilizing the clean water stored in a bottom portion of the lower chamber 44. The clean water in the bottom portion of the lower chamber 44 is pumped up by a circulating pump 49 to be supplied to the injecting portions 42. An output (rotation speed) of the circulating pump 49, that is, the amount of clean water injected from the injecting portions 42 (hereinafter referred to as an "injection flow rate") is controlled by the controller 47. A clean water flow meter 40 configured to measure the injection flow rate is provided between the circulating pump 49 and each injecting portion 42. A signal regarding the injection flow rate measured by the clean water flow meter 40 is transmitted to the controller 47. A method of controlling the injection flow rate by the controller 47 will be described later.

The exhaust gas introduced to the scrubber 31 is high in temperature. In order to recirculate the exhaust gas, the temperature of the exhaust gas needs to be decreased. In the present embodiment, the clean water injected from the injecting portions 42 also serves as cooling water. Therefore, the injecting portions 42 are disposed at the exhaust gas inflow passage 41 such that a large amount of clean water can be injected to the exhaust gas at an early stage, that is, when the exhaust gas flows through the exhaust gas inflow passage 41. Further, the scrubber 31 according to the present embodiment includes two injecting portions 42 such that a larger amount of clean water can be injected to the exhaust gas.

The upper chamber 43 is a chamber located at an upper side in the scrubber 31. As shown in Fig. 2, the inside of the scrubber 31 is divided by a disc member 50. The upper chamber 43 is located at an upper side of the disc member 50, and the lower chamber 44 is located at a lower side of the disc member 50. Therefore, an upper surface of the disc member 50 is a bottom surface 51 of the upper chamber 43. The upper chamber 43 has a cylindrical shape, and the exhaust gas outflow passage 46 extends through the center of the upper chamber 43 in an upper-lower direction. The exhaust gas and a large amount of clean water flows from the exhaust gas inflow passage 41 into the upper chamber 43. Most of the clean water injected by the injecting portions 42 becomes not the mist but the liquid in the upper chamber 43. To be specific, the bottom surface 51 of the upper chamber 43 receives the liquid clean water injected from the injecting portions 42.

The lower chamber 44 is a chamber located at a lower side of the upper chamber 43. As with the upper chamber 43, the lower chamber 44 has a cylindrical shape. The liquid clean water thinly existing on the bottom surface 51 of the upper chamber 43 is discharged through the communication pipes 45 to the lower chamber 44. The clean water discharged to the lower chamber 44 is stored in the bottom portion of the lower chamber 44. A part of the clean water stored in the bottom portion flows through the circulating pump 49 to be injected from the injecting portions 42, and another part of the clean water flows through the wastewater treatment unit 32 as the scrubber wastewater to be discharged to the outside of the ship. Further, the clean water, the amount of which is equal to the amount of scrubber wastewater discharged to the outside of the ship, is supplied from a makeup water tank 52 through a makeup water supply pump 53 to the lower chamber 44. In addition, caustic soda for desulfurization is supplied from a caustic soda supply tank 54 through a caustic soda supply pump 55 to the lower chamber 44. With this, the clean water containing the caustic soda is injected from the injecting portions 42, so that the sulfur oxide (SOx) is removed from the exhaust gas. It should be noted that the amount of caustic soda supplied may be determined based on an observed pH value of the clean water.

A differential pressure gauge 56 is included in the scrubber 31 so as to connect the upper chamber 43 and the lower chamber 44. The differential pressure gauge 56 measures a differential pressure between the upper chamber 43 and the lower chamber 44 (hereinafter referred to as an "internal differential pressure") and transmits a signal regarding the internal differential pressure to the controller 47. The exhaust gas of the diesel engine 10 flows into the upper chamber 43, and as described below, the lower chamber 44 is connected to an inlet side of the EGR blower 33 through the exhaust gas outflow passage 46 (see Fig. 1). In addition, an inner diameter of each communication pipe 45 connecting the upper chamber 43 and the lower chamber 44 is not so large. Therefore, a relatively large pressure difference is generated between the upper chamber 43 and the lower chamber 44.

The communication pipes 45 are tube members through which the exhaust gas and the clean water in the upper chamber 43 are introduced to the lower chamber 44. The scrubber 31 according to the present embodiment includes a plurality of communication pipes 45. Each communication pipe 45 extends downward from the bottom surface 51 of the upper chamber 43, and a lower portion thereof is located in the vicinity of an upper-lower direction center of the lower chamber 44. Each communication pipe 45 is a circular tube whose diameter is constant from an upper end to a lower end and which has an annular cross section. The upper end of each communication pipe 45 penetrates the disc member 50 to reach the bottom surface 51 of the upper chamber 43. To be specific, the upper end of the communication pipe 45 is open in the upper chamber 43. A cutting surface of an upper surface of each communication pipe 45 is substantially flush with the bottom surface 51 of the upper chamber 43. The lower end of each communication pipe 45 is located in the vicinity of the upper-lower direction center of the lower chamber 44.

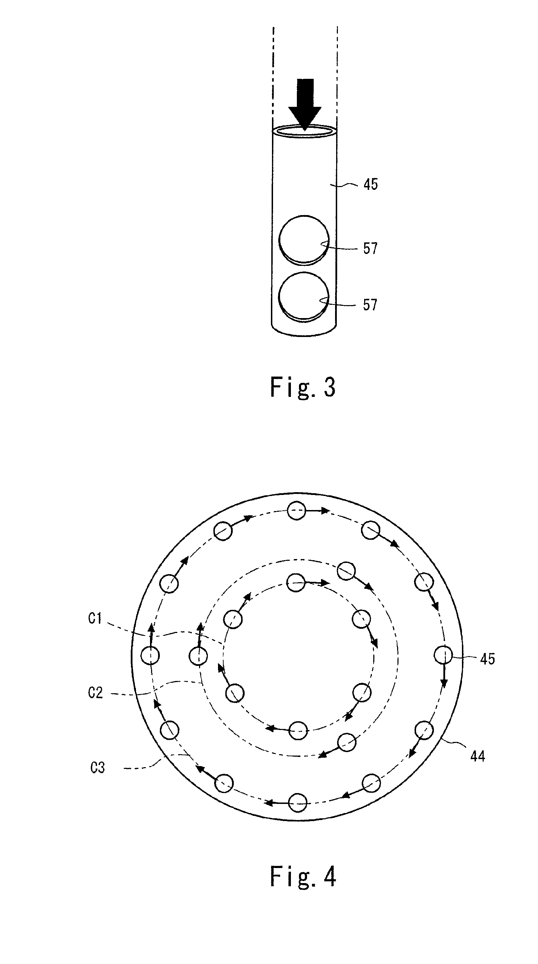

Fig. 3 is an enlarged view of the lower portion of the communication pipe 45. As shown in Fig. 3, although a lower end surface of each communication pipe 45 is closed, opening portions 57 are formed on a side surface of the lower portion of each communication pipe 45. The opening portions 57 are open in a direction (horizontal direction) perpendicular to a direction (vertical direction) in which the communication pipe 45 extends. The exhaust gas and the clean water in the upper chamber 43 flows from the upper ends of the communication pipes 45 through the insides of the communication pipes 45 to be discharged from the opening portions 57. The exhaust gas and the clean water having flowed from the upper side to the lower side on the sheet of Fig. 3 is discharged from the opening portions 57 to this side on the sheet. In the present embodiment, the circular opening portions 57 are respectively formed at two positions of the lower portion of the communication pipe 45. However, the opening portion 57 may be formed at one position, and the shape thereof is not especially limited.

Fig. 4 is a horizontal cross-sectional view of an upper side of the lower chamber 44. As shown in Fig. 4, each communication pipe 45 is arranged on any of three virtual circles C1 to C3 around a middle portion (central axis) of the lower chamber 44. In Fig. 4, arrows extending from the communication pipes 45 denote directions in which the opening portions 57 are open, that is, directions in which the exhaust gas and the clean water are discharged. As shown by the arrows in Fig. 4, the opening portion 57 of each communication pipe 45 is formed so as to be open in a tangential direction of the virtual circle C1, C2, or C3 on which the communication pipe 45 is arranged. The opening portions 57 of the communication pipes 45 are open in the same circumferential direction (clockwise direction in Fig. 4). The flow direction of the exhaust gas changes at a right angle at the opening portion 57. The liquid droplets of the mist containing the SOx and particulate matters in the exhaust gas cannot curve successfully due to their inertia, so that a considerable amount of liquid droplets fall down. In addition, the clean water having flowed down along the inner surfaces of the communication pipes 45 also falls down. The mist having been made fine flows rotationally in the lower chamber 44 together with the exhaust gas.

The exhaust gas outflow passage 46 is a passage through which the exhaust gas is suctioned and discharged from the lower chamber 44. The exhaust gas outflow passage 46 of the present embodiment is a tubular pipe, and an upstream end portion (end portion shown in Fig. 2) thereof is open at the center of an upper portion of the lower chamber 44. Then, the exhaust gas outflow passage 46 extends through the center of the upper chamber 43 in the upper-lower direction, and a downstream end portion thereof is connected to the inlet side (upstream side) of the EGR blower 33 (see Fig. 1). Since the exhaust gas is suctioned at the inlet side of the EGR blower 33, the exhaust gas in the lower chamber 44 is discharged from the upper portion of the lower chamber 44 so as to be suctioned through the exhaust gas outflow passage 46.

The flows of the exhaust gas and the clean water in the scrubber 31 are explained below. The high-temperature exhaust gas having flowed into the exhaust gas inflow passage 41 is cooled down by a large amount of clean water injected from the injecting portions 42. Most of the clean water becomes a liquid state to thinly exist on the bottom surface 51 of the upper chamber 43. After that, the clean water flows along the inner side surfaces of the communication pipes 45 to be discharged to the lower chamber 44. The inner diameter of each communication pipe 45 is set such that the liquid clean water does not close the communication pipe 45. On the other hand, the exhaust gas and the mist of the clean water flow through the communication pipes 45 so as to flow through an inner side of the liquid clean water. According to the communication pipe 45 of the present embodiment, the liquid clean water flowing along the inner side surface of the communication pipe 45 serves as the throat portion of the venturi tube, and the exhaust gas accelerates immediately when flowing through the communication pipe 45 whose cross-sectional area is reduced by the clean water flowing downward. With this, the mist of the clean water is made finer by the exhaust gas, so that the fine mist efficiently captures the SOx and particulate matters contained in the exhaust gas.

After that, the exhaust gas and the mist of the clean water having captured the SOx and the particulate matters are powerfully discharged from the opening portions 57 of the communication pipes 45 to the lower chamber 44. As above, the opening portion 57 of each communication pipe 45 is open in the tangential direction of the virtual circle C1, C2, or C3. Therefore, the mist of the clean water discharged from the communication pipes 45 generates a rotational flow (clockwise in Fig. 4) to be suctioned through the exhaust gas outflow passage 46 located above the lower chamber 44. Since the clean water having captured the SOx and the particulate matters flows rotationally, the clean water, the SOx, and the particulate matters are collected on an inner wall of the lower chamber 44 by centrifugal force. The foregoing has explained the flows of the exhaust gas and the clean water.

The controller 47 is constituted by a CPU and the like and is a device configured to adjust the injection flow rate (the amount of clean water injected from the injecting portions 42). The controller 47 of the present embodiment obtains the exhaust gas flow rate based on the signal transmitted from the exhaust gas flow meter 48, obtains the injection flow rate based on the signal transmitted from the clean water flow meter 40, and obtains the internal differential pressure based on the signal transmitted from the differential pressure gauge 56. Then, the controller 47 calculates and generates a control signal based on the exhaust gas flow rate, the injection flow rate, and the internal differential pressure and transmits the control signal to the circulating pump 49.

In a case where no control operation is performed, for example, the exhaust gas flow rate decreases by the decrease in the load of the diesel engine 10, so that the internal differential pressure decreases. As a result, the velocity of the exhaust gas flowing through the communication pipe 45 decreases. In such a case, the SOx and the particulate matters may not be efficiently captured. This is because in order that the clean water efficiently captures the SOx and the particulate matters, the velocity of the exhaust gas has to fall within a predetermined velocity range (for example, 60 to 90 m/s). Therefore, in a case where the flow rate of the exhaust gas flowing through the scrubber 31 decreases, the velocity of the exhaust gas flowing through the communication pipes 45 needs to be increased in some way.

The controller 47 of the present embodiment determines based on the increase and decrease of the internal differential pressure whether or not the flow rate of the exhaust gas flowing through the scrubber 31 has decreased. When it is determined that the flow rate of the exhaust gas flowing through the scrubber 31 has decreased, the controller 47 causes the circulating pump 49 to increase the injection flow rate. When the injection flow rate increases, the liquid clean water flowing along the inner side surface of the communication pipe 45 increases, so that the cross-sectional area (hereinafter referred to as an "effective cross-sectional area") of the communication pipe 45 through which the exhaust gas and the mist of the clean water can actually flow decreases. When the effective cross-sectional area decreases, the velocity of the exhaust gas increases. With this, the internal differential pressure increases. In contrast, when the flow rate of the exhaust gas flowing through the scrubber 31 increases, the controller 47 decreases the injection flow rate. With this, the liquid clean water flowing along the inner side surface of the communication pipe 45 decreases, so that the effective cross-sectional area increases. Thus, the velocity of the exhaust gas in the communication pipes 45 can be maintained within a predetermined velocity range (for example, 60 to 90 m/s).

As above, in the scrubber 31 according to the present embodiment, the effective area of the communication pipe 45 is changed by adjusting the injection flow rate, and with this, the velocity of the exhaust gas flowing through the communication pipe 45 is adjusted to fall within an appropriate range. The flow rate of the exhaust gas in the scrubber 31 may change depending on the steam and mist generated from the clean water. Therefore, it is preferable to control the flow rate of the exhaust gas in the scrubber 31 based on a correlation between the differential pressure (internal differential pressure) between the inlet and outlet of the communication pipe 45 and the velocity of the exhaust gas in the communication pipe 45. In the present embodiment, the load of the diesel engine 10 is determined based on the signal regarding the internal differential pressure but may be determined based on a signal regarding a governor rack (fuel injection amount) or a signal regarding the rotation speed of the diesel engine 10. In this case, the change in the EGR ratio needs to be also considered.

As described above, in order that the clean water efficiently captures the SOx and the particulate matters, the velocity of the exhaust gas is important. In addition, a liquid-gas ratio is also important. The "liquid-gas ratio" herein denotes a ratio of the flow rate of the mist of the clean water flowing through the communication pipe 45 to the flow rate of the exhaust gas flowing through the communication pipe 45. It is desirable that the liquid-gas ratio be, for example, 0.5 to 1.5 L/m³. The flow rate of the mist of the clean water flowing through the communication pipe 45 can be estimated from the injection flow rate. The controller 47 calculates the liquid-gas ratio based on the obtained exhaust gas flow rate and injection flow rate. When the obtained liquid-gas ratio does not fall within the appropriate range, the controller 47 causes the circulating pump 49 to increase or decrease the injection flow rate such that the liquid-gas ratio falls within the appropriate range. However, there may be a case where when one of the velocity of the exhaust gas and the liquid-gas ratio is adjusted to fall within the appropriate range, the other does not fall within the appropriate range. In this case, in order to more efficiently capture the SOx and the particulate matters, the injection flow rate is adjusted such that any of the velocity of the exhaust gas and the liquid-gas ratio falls within the appropriate range.

The foregoing has explained the scrubber 31 according to the present embodiment. As above, according to the scrubber 31 of the present embodiment, even in a case where a large amount of clean water is injected to cool down the exhaust gas, most of the clean water becomes the liquid state to be discharged from the upper chamber 43 to the lower chamber 44 without closing the communication pipes 45. Then, the mist of the injected clean water is made finer while flowing through the communication pipe 45 whose cross-sectional area is made smaller by the clean water flowing down. Thus, the clean water can capture the SOx and particulate matters contained in the exhaust gas. Therefore, according to the scrubber 31 of the present embodiment, the clean water can remove the SOx and the particulate matters from the exhaust gas, and in addition, the clean water can adequately serve as the cooling water for cooling down the exhaust gas. In addition, unlike general reserved water type scrubbers, the scrubber 31 according to the present embodiment can maintain its performance constant even in a case where the scrubber 31 is mounted on a ship which rolls.

The foregoing has explained the embodiment of the present invention in reference to the drawings. However, specific configurations are not limited to the embodiment. Design changes and the like within the scope of the present invention are included in the present invention.

### Industrial Applicability

According to the scrubber of the present invention, the exhaust gas can be efficiently cooled down by injecting a large amount of clean water. In addition, a part of the clean water can be made finer, and the fine clean water can capture the SOx and particulate matters of the exhaust gas. Therefore, the present invention is useful in a technical field of scrubbers.

### Reference Signs List

- 31: scrubber
- 41: exhaust gas inflow passage
- 42: injecting portion
- 43: upper chamber
- 44: lower chamber
- 45: communication pipe
- 46: exhaust gas outflow passage
- 51: bottom surface
- 57: opening portion
- 100: ship
- 101: engine system

## Claims

1. A scrubber configured to remove SOx and particulate matters contained in an exhaust gas of a diesel engine,
the scrubber comprising:
an exhaust gas inflow passage through which a high-temperature exhaust gas is introduced;
an injecting portion configured to inject clean water to the exhaust gas introduced through the exhaust gas inflow passage;
an upper chamber including a bottom surface configured to receive the clean water injected from the injecting portion;
a lower chamber located under the upper chamber;
a communication pipe through which the clean water received by the bottom surface of the upper chamber is discharged to the lower chamber and the exhaust gas in the upper chamber is introduced to the lower chamber; and
an exhaust gas outflow passage through which the exhaust gas having been introduced to the lower chamber is suctioned and discharged from the lower chamber.

2. The scrubber according to claim 1, wherein:
the communication pipe extends downward from the bottom surface of the upper chamber; and
an opening portion formed at a lower portion of the communication pipe is open in the lower chamber.

3. The scrubber according to claim 2, wherein:
the communication pipe is one of a plurality of communication pipes; and
each of the opening portions of the communication pipes is formed to be open in a substantially tangential direction of a virtual circle around a vicinity of a center of the lower chamber.

4. The scrubber according to claim 3, wherein the exhaust gas outflow passage is configured such that the exhaust gas in the lower chamber is suctioned through a center of an upper portion of the lower chamber.

5. The scrubber according to claim 1, wherein when a flow rate of the exhaust gas in the scrubber decreases, the amount of clean water injected from the injecting portion is increased.

6. An engine system comprising:
a diesel engine; and
the scrubber according to any one of claims 1 to 5.

7. A ship comprising the engine system according to claim 6.
